# EUROPEAN PATENT SPECIFICATION

(11) **EP 3 754 241 B1**
(45) Date of publication and mention of the grant of the patent: **15.03.2023**
(21) Application number: 19180423.6
(22) Date of filing: 17.06.2019
(51) Int. Cl.: F16L 41/10, F16L 58/10, F16L 47/16, F16L 47/28, F16L 58/18, B29C 70/68, B29C 45/14

(54) **CENTRAL INSERTION CONNECTOR**
ZENTRALER EINFÜHRUNGSVERBINDER
CONNECTEUR D'INSERTION CENTRALE

(43) Date of publication of application: 23.12.2020
(73) Proprietor: Shin Yueh Applied Materials Co., Ltd., Zhongli City, Taoyuan County 320 (TW)
(72) Inventor: Chen, Ching-Hsien, Cambridge, CB1 1AH (GB)
(74) Representative: Horak, Michael

(56) References cited:
- WO-A1-2011/054439
- CN-A- 106 764 210
- CN-B- 103 759 091
- JP-A- 2014 202 225
- US-A- 4 437 689

## Description

### TECHNICAL FIELD OF THE INVENTION

The present invention relates to a central insertion connector, and more particularly to a central insertion connector that is structured to provide an effect of corrosion resistance and also to enhance overall stiffness and strength thereof so as to improve the operation performance of such a central insertion connector.

### DESCRIPTION OF THE PRIOR ART

Equipment, such as hydraulic equipment, gas devices (canisters), oxygen devices (canisters), and pneumatic equipment, are commonly involved in industrial applications. A central insertion connector, which functions like a fitting, is often used to make connection with external piping or tubing as an adaptor or connector, in order to provide normal operation and use of such equipment.

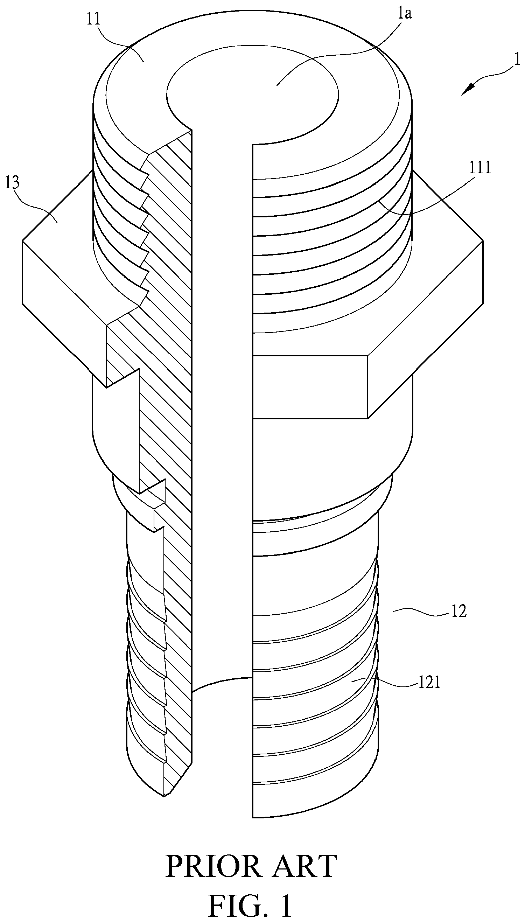

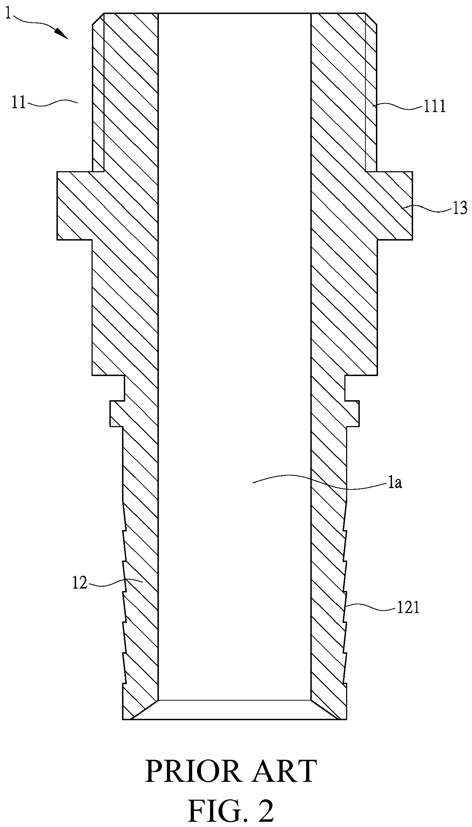

As shown in FIGS. 1 and 2, a commonly used central insertion connector 1 is structured to achieve an effect of corrosion resistance, and as such, the central insertion connector 1 is often made of a plastic material. The central insertion connector 1 comprises a flow channel 1a penetrating therethrough. The flow channel 1a is provided for liquid or gas to flow therethrough. The central insertion connector 1 has one end that comprises a threaded connection section 11. The threaded connection section 11 has an outer circumference that is formed with a thread 111. Formed at an end that is opposite to the threaded connection section 11 is an insertion section 12. The insertion section 12 has an outer circumference that is formed as a roughened surface 121 including multiple circumferential ridges formed thereon, in a form similar to nodes of bamboo stalks. Arranged between the threaded connection section 11 and the insertion section 12 is a rotating section 13 made in a polygonal form.

As shown in FIGS. 1 and 2, the central insertion connector 1 uses the thread 111 of the threaded connection section 11 to screw, through rotation of the rotating section 13, into a connection port of equipment (not shown) to achieve a leak-resistant screwed connection. The insertion section 12 of the central insertion connector 1 may receive a hose or a flexible pipe (not shown) to fit over the outer circumference thereof. Further, a clamp (not shown) may be applied to loop around the insertion section 12 and the hose or flexible pipe in order to prevent the hose or flexible pipe from detaching from the insertion section 12 and also to help improve the effect of leak resistance between the insertion section 12 and the hose or flexible pipe. This completes installation of the central insertion connector 1.

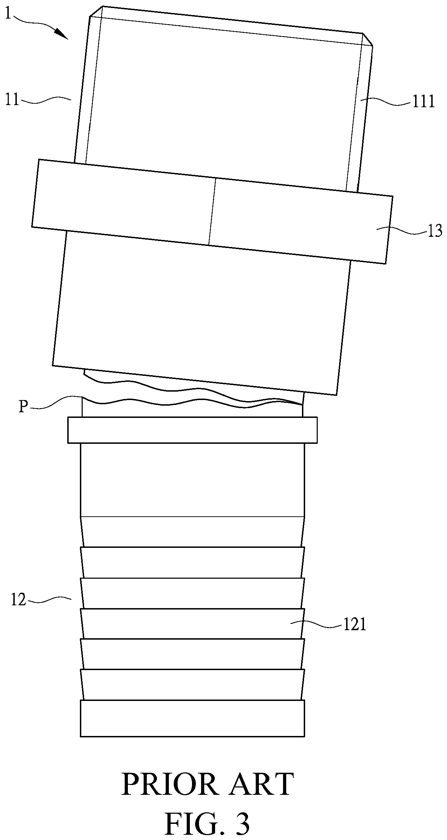

As shown in FIG. 3, although the above-described structure of the conventional central insertion connector 1 provides an effect of connection with a hose or flexible pipe, such a conventional central insertion connector 1 is made of a plastic material, which may not be of sufficient stiffness and strength. In addition, the insertion section 12 is made with a wall thickness that is far less than a wall thickness of the threaded connection section 11, so that the stiffness and strength of the insertion section 12 are even weaker. As such, in making connection with the central insertion connector 1 through insertion, the insertion section 12 is susceptible to cracking or breaking at a damage site P, making the central insertion connector 1 useless due to the damage, or causing unexpected potential risk of leaking through the cracking that does not cause attention of an operator.

Prior art patent documents are known, including US 4 437 689 A, WO 2011/054439 A1, JP 2014 202225 A, CN 106 764 210 A, and CN 103 759 091. These documents teach covering a pipe or a fitting, or a connector with a coating layer or a corrosion-resistant layer. However, all of these documents fail to teach features being provided on both ends of the outside surface of the pipe, fitting, or connector to securely fix the coating layer or corrosion-resistant layer on the pipe, fitting, or connector without undesired detachment.

### SUMMARY OF THE INVENTION

The primary objective of the present invention is to provide a central insertion connector, which overcomes the shortcomings that the prior art central insertion connector, although effective in resisting corrosion, does not possess sufficient stiffness and strength, and is susceptible to damage.

For such a purpose, a technical solution of the present invention that is presented in claim 1 provides a central insertion connector. The central insertion connector comprises a main body unit and a corrosion resistant layer coated on and covering the main body unit. The main body unit comprises a penetrating flow channel extending therethrough. The main body unit at least comprises a threaded connection section and an insertion section that is arranged opposite to the threaded connection section. Surfaces of the flow channel, the threaded connection section, and the insertion section of the main body unit are coated with and covered by the corrosion resistant layer. The threaded connection section is provided with a circumferential groove and the corrosion resistant layer is allowed to penetrate into the circumferential groove of the threaded connection section to form a first retention portion. The insertion section is provided with a trough and the corrosion resistant layer penetrates into the trough of the insertion section to form a second retention portion. A portion of the corrosion resistant layer coated on an outer circumference of the threaded connection section is formed with a thread.

The efficacy of the present invention that the technical solution presented in claim 1 may achieve is that, on the one hand, the central insertion connector is provided with an effect of corrosion resistance, and on the other hand, overall stiffness and strength are improved so as to enhance operation performance of the central insertion connector.

### BRIEF DESCRIPTION OF THE DRAWINGS

FIG. 1 is a perspective view showing a conventional central insertion connector.
FIG. 2 is a cross-sectional view showing the conventional central insertion connector.
FIG. 3 is a schematic view illustrating an insertion part of the conventional central insertion connector is broken.
FIG. 4 is a perspective view showing a central insertion connector according to the present invention.
FIG. 5 is a cross-sectional view showing the central insertion connector according to the present invention.
FIG. 6 illustrates an alternative example of the central insertion connector according to the present invention.

### DETAILED DESCRIPTION OF THE PREFERRED EMBODIMENT

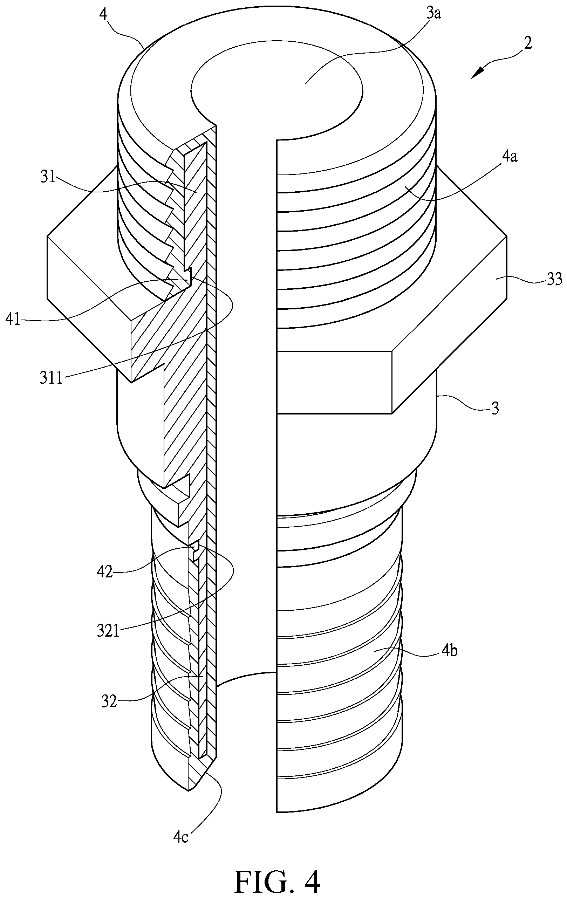

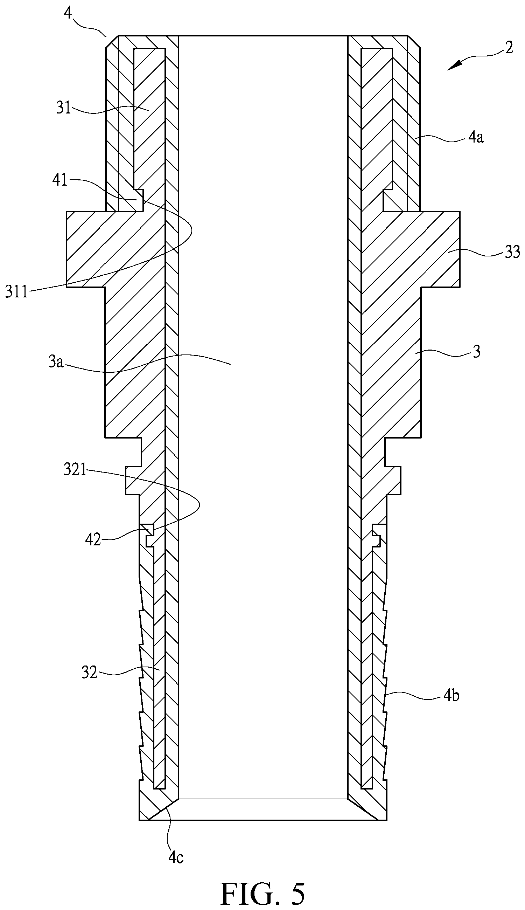

Referring to FIGS. 4 and 5 first, the present invention provides a central insertion connector 2 that comprises a main body unit 3 and a corrosion resistant layer 4 coated on and covering the main body unit 3.

As shown in FIGS. 4 and 5, the main body unit 3 is made of a metallic material. The main body unit 3 comprises a penetrating flow channel 3a extending completely therethrough. The flow channel 3a is provided to allow liquid or gas to flow therethrough. An end portion of the main body unit 3 is formed with a threaded connection section 31. A circumferential groove 311 is formed at a location corresponding to a lower end of the threaded connection section 31. The main body unit 3 comprises an insertion section 32 that is arranged opposite to the threaded connection section 31. A circumferential trough 321 is formed at a location corresponding to an upper end of the insertion section 32 (which is an end that face toward the threaded connection section 31). The main body unit 3 is provided with a rotating section 33 that is made in a polygonal form and is arranged between the threaded connection section 31 and the insertion section 32. With the rotating section 33, an operator may readily rotate the rotating section 33 to screw the threaded connection section 31 into a connection port of equipment (not shown) for establishing connection therebetween.

As shown in FIGS. 4 and 5, the corrosion resistant layer 4 is made of a mixture of a corrosion resistant material (such as polytetrafluoroethylene, branded as Teflon) and a plastic material. The corrosion resistant layer 4 can be formed through for example insert molding to mold around and cover inside and outside surfaces of the main body unit 3. Specifically, the corrosion resistant layer 4 is formed to coat on and cover surfaces of the flow channel 3a, the threaded connection section 31, and the insertion section 32 of the main body unit 3. A portion of corrosion resistant layer 4 that is coated on and covering an outer circumference of the threaded connection section 31 is formed with a thread 4a, with which the central insertion connector 2 is readily screwed to equipment. A portion of the corrosion resistant layer 4 that is coated on and covering an outer circumference of the insertion section 32 is formed with multiple ridges, which are arranged in the form similar to nodes on an outer surface of a bamboo stalk, to form a roughened surface 4b, with which the central insertion connector 2 may be readily connectable, by means of insertion with the insertion section 32, with a hose or flexible pipe (not shown). The corrosion resistant layer 4 may partly penetrate into the circumferential groove 311 on the threaded connection section 31 to form a first retention portion 41; the corrosion resistant layer 4 may also partly penetrate into the trough 321 of the insertion section 32 to form a second retention portion 42. By means of effects of retaining and resisting achieved with the first retention portion 41 and the second retention portion 42, the corrosion resistant layer 4 is prevented from detaching from the main body unit 3. Further, by having the corrosion resistant layer 4 coated on and covering the surfaces of the flow channel 3a, the threaded connection section 31, and the insertion section 32 of the main body unit 3, the metal-made main body unit 3 is provided with an effect of corrosion resistance so that the central insertion connector 2 is provided with sufficient stiffness and strength (as being made of a metallic material that provides the stiffness and strength) and corrosion resistance. It is noted that the corrosion resistant layer 4 is formed with a diverging configuration expanding toward the outside at an end of the insertion section 32 to form a guiding section 4c, the guiding section 4c allows liquid or gas flowing into the flow channel 3a to more smoothly flow out of the central insertion connector 2.

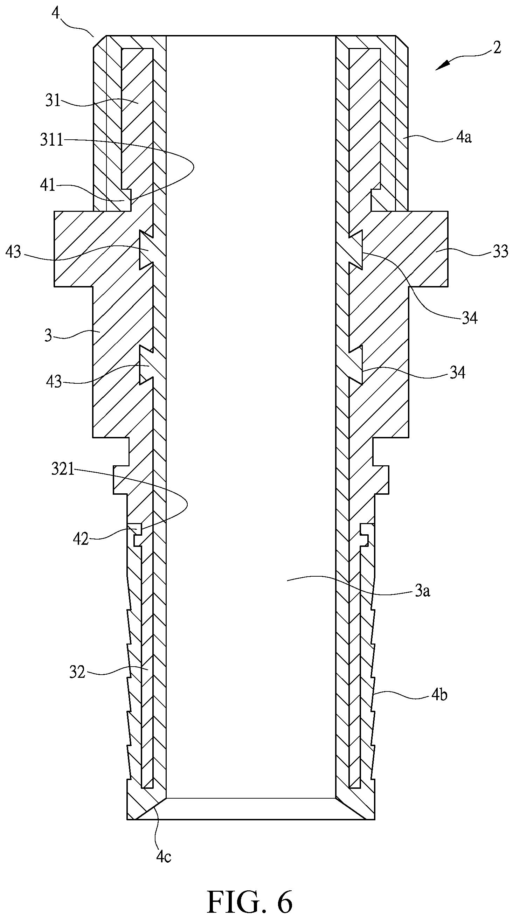

As shown in FIG. 6, in an alternative or modified form, the flow channel 3a of the main body unit 3 is provided, in an inner surface thereof, with a resisting mechanism 34 through additional machining applied to an inner part thereof roughly corresponding to the rotating section 33. The resisting mechanism 34 is made up of at least one dovetailed groove, so that when the corrosion resistant layer 4 is coated on the surfaces of the flow channel 3a, the threaded connection section 31, and the insertion section 32 of the main body unit 3, the corrosion resistant layer 4 is allowed to partly penetrate into the resisting mechanism 34 to form a third retention portion 43, by which the corrosion resistant layer 4 is better prevented from detaching from the main body unit 3, making the corrosion resistant layer 4 more securely and more fixedly attached to the main body unit 3.

The primary efficacy of the present invention is that the main body unit 3 of the central insertion connector 2 is made of a metallic material so as to improve overall stiffness and strength of the central insertion connector 2, and by coating the corrosion resistant layer 4 on the surfaces of the flow channel 3a, the threaded connection section 31, and the insertion section 32 of the main body unit 3, the central insertion connector 2 is provided with an effect of corrosion resistance, while at the same time possessing enhanced overall stiffness and strength thereby improving operation performance of the central insertion connector 2.

The second efficacy of the present invention is that, in the main body unit 3, the threaded connection section 31 is provided with the circumferential groove 311 and the insertion section 32 is provided with the trough 321, so that the corrosion resistant layer 4 is allowed to penetrate into the circumferential groove 311 on the threaded connection section 31 to form the first retention portion 41 and the corrosion resistant layer 4 is also allowed to penetrate into the trough 321 of the insertion section 32 to form the second retention portion 42, whereby the first retention portion 41 and the second retention portion 42 provide an effect of retaining and resisting to prevent the corrosion resistant layer 4 from detaching from the main body unit 3 and thus further improving operation performance of the central insertion connector 2.

The third efficacy of the present invention is that an inner part of the flow channel 3a of the main body unit 3 is subjected to additional machining at a location roughly corresponding to the rotating section 33 to form the resisting mechanism 34, so that when the corrosion resistant layer 4 is coated on the surfaces of the flow channel 3a, the threaded connection section 31, and the insertion section 32 of the main body unit 3, the corrosion resistant layer 4 is additionally allowed to penetrate into the resisting mechanism 34 to form the third retention portion 43, with which the corrosion resistant layer 4 is better prevented from detaching from the main body unit 3, making the corrosion resistant layer 4 more securely and more fixedly attach to the main body unit 3 thereby further improving operation performance of the central insertion connector 2.

## Claims

1. A central insertion connector, comprising a main body unit (3), and a corrosion resistant layer (4) coated on and covering the main body unit (2), wherein the main body unit (3) comprises a penetrating flow channel (3a) extending therethrough; the main body unit (3) at least comprises a threaded connection section (31) and an insertion section (32) that is arranged opposite to the threaded connection section (31); wherein surfaces of the flow channel (3a), the threaded connection section (31), and the insertion section (32) of the main body unit (3) are coated with and covered by the corrosion resistant layer (4), wherein the threaded connection section (31) is provided with a circumferential groove (311) and the corrosion resistant layer (4) is allowed to penetrate into the circumferential groove (311) of the threaded connection section (31) to form a first retention portion (41) and wherein the insertion section (32) is provided with a trough (321) and the corrosion resistant layer (4) penetrates into the trough (321) of the insertion section (32) to form a second retention portion (42); **characterized in that** a portion of the corrosion resistant layer (4) coated on an outer circumference of the threaded connection section (31) is formed with a thread (4a).

2. The central insertion connector according to claim 1, wherein the flow channel (3a) of the main body unit (3) is provided therein with a resisting mechanism (34), wherein with the corrosion resistant layer (4) coated on the surfaces of the flow channel (3a), the threaded connection section (31), and the insertion section (32) of the main body unit (3), the corrosion resistant layer (4) penetrates into the resisting mechanism (34) to form a third retention portion (43).

3. The central insertion connector according to claim 1, wherein the main body unit (3) is provided with a rotating section (33) between the threaded connection section (31) and the insertion section (32) and the flow channel (3a) of the main body unit (3) is provided therein with a resisting mechanism (34) at a location corresponding to the rotating section (33) through additional machining, wherein with the corrosion resistant layer (4) coated on the surfaces of the flow channel (3a), the threaded connection section (31), and the insertion section (32) of the main body unit (3), the corrosion resistant layer (4) penetrates into the resisting mechanism (34) to form a third retention portion (43).

4. The central insertion connector according to claim 1, wherein a portion of the corrosion resistant layer (4) coated on an outer circumference of the insertion section (32) is formed with multiple ridges to form a roughened surface (4b).

5. The central insertion connector according to claim 2, wherein the resisting mechanism (34) comprises at least one dovetailed groove.

6. The central insertion connector according to claim 1, 2, or 3, wherein the corrosion resistant layer (4) is formed with a guiding section (4c) that is of a diverging configuration expanding toward the outside at an end of the insertion section (32).

## Patentansprüche

1. Zentraler Einführungsverbinder, der eine Hauptkörpereinheit (3) und eine korrosionsbeständige Schicht (4) umfasst, die auf der Hauptkörpereinheit (2) aufgetragen ist und diese bedeckt, wobei die Hauptkörpereinheit (3) einen sich durch sie hindurch erstreckenden, durchdringenden Strömungskanal (3a) umfasst; wobei die Hauptkörpereinheit (3) mindestens einen Gewindeverbindungsabschnitt (31) und einen Einführungsabschnitt (32) umfasst, der gegenüber dem Gewindeverbindungsabschnitt (31) angeordnet ist; wobei die Oberflächen des Strömungskanals (3a), des Gewindeverbindungsabschnitts (31) und des Einführungsabschnitts (32) der Hauptkörpereinheit (3) mit der korrosionsbeständigen Schicht (4) beschichtet und bedeckt sind, wobei der Gewindeverbindungsabschnitt (31) mit einer Umfangsnut (311) versehen ist und die korrosionsbeständige Schicht (4) in die Umfangsnut (311) des Gewindeverbindungsabschnitts (31) eindringen kann, um einen ersten Rückhalteabschnitt (41) zu bilden, und wobei der Einführungsabschnitt (32) mit einer Rinne (321) versehen ist und die korrosionsbeständige Schicht (4) in die Rinne (321) des Einführungsabschnitts (32) eindringt, um einen zweiten Rückhalteabschnitt (42) zu bilden;
**dadurch gekennzeichnet, dass** ein Teil der korrosionsbeständigen Schicht (4), die auf einem Außenumfang des Gewindeverbindungsabschnitts (31) aufgetragen ist, mit einem Gewinde (4a) ausgebildet ist.

2. Zentraler Einführungsverbinder nach Anspruch 1, wobei der Strömungskanal (3a) der Hauptkörpereinheit (3) darin mit einem Widerstandsmechanismus (34) versehen ist, wobei mit der korrosionsbeständigen Schicht (4), die auf den Oberflächen des Strömungskanals (3a), des Gewindeverbindungsabschnitts (31) und des Einführungsabschnitts (32) der Hauptkörpereinheit (3) aufgetragen ist, die korrosionsbeständige Schicht (4) in den Widerstandsmechanismus (34) eindringt, um einen dritten Rückhalteabschnitt (43) zu bilden.

3. Zentraler Einführungsverbinder nach Anspruch 1, wobei die Hauptkörpereinheit (3) zwischen dem Gewindeverbindungsabschnitt (31) und dem Einführungsabschnitt (32) mit einem Drehabschnitt (33) versehen ist und der Strömungskanal (3a) der Hauptkörpereinheit (3) darin mit einem Widerstandsmechanismus (34) an einer Stelle entsprechend dem Drehabschnitt (33) durch zusätzliche Bearbeitung versehen ist, wobei mit der korrosionsbeständigen Schicht (4), die auf den Oberflächen des Strömungskanals (3a), dem Gewindeverbindungsabschnitt (31), und dem Einführungsabschnitt (32) der Hauptkörpereinheit (3) aufgetragen ist, die korrosionsbeständige Schicht (4) Widerstandsmechanismus (34) eindringt, um einen dritten Rückhalteabschnitt (43) zu bilden.

4. Zentraler Einführungsverbinder nach Anspruch 1, wobei ein Teil der korrosionsbeständigen Schicht (4), die auf einem äußeren Umfang des Einführungsabschnitts (32) aufgetragen ist, mit mehreren Rippen ausgebildet ist, um eine aufgeraute Oberfläche (4b) zu bilden.

5. Zentraler Einführungsverbinder nach Anspruch 2, wobei der Widerstandsmechanismus (34) mindestens eine schwalbenschwanzförmige Nut aufweist.

6. Zentraler Einführungsverbinder nach Anspruch 1, 2 oder 3, wobei die korrosionsbeständige Schicht (4) mit einem Führungsabschnitt (4c) ausgebildet ist, der eine divergierende Konfiguration aufweist, die sich an einem Ende des Einführungsabschnitts (32) nach außen erweitert.

## Revendications

1. Connecteur à insertion centrale, comprenant une unité de corps principal (3) et une couche résistant à la corrosion (4) appliquée sur et recouvrant l'unité de corps principal (2), où l'unité de corps principal (3) comprend un canal d'écoulement qui pénètre (3a) et s'étend à travers celui-ci ; l'unité de corps principal (3) comprend au moins une section de connexion filetée (31) et une section d'insertion (32) qui est agencée à l'opposé de la section de connexion filetée (31) ; où les surfaces du canal d'écoulement (3a), de la section de connexion filetée (31) et de la section d'insertion (32) de l'unité de corps principal (3) sont revêtues et couvertes par la couche résistant à la corrosion (4), où la section de connexion filetée (31) est pourvue d'une rainure circonférentielle (311) et la couche résistante à la corrosion (4) peut pénétrer dans la rainure circonférentielle (311) de la section de connexion filetée (31) pour former une première partie de rétention (41) et où la section d'insertion (32) est pourvue d'un creux (321) et la couche résistant à la corrosion (4) pénètre dans le creux (321) de la section d'insertion (32) pour former une deuxième partie de rétention (42) ;
**caractérisé en ce qu'**une partie de la couche résistant à la corrosion (4) appliquée sur une circonférence extérieure de la section de connexion filetée (31) est formée avec un filetage (4a).

2. Connecteur à insertion centrale selon la revendication 1, où le canal d'écoulement (3a) de l'unité de corps principal (3) est pourvu à l'intérieur d'un mécanisme de résistance (34), où avec la couche résistant à la corrosion (4) appliquée sur les surfaces du canal d'écoulement (3a), de la section de connexion filetée (31) et de la section d'insertion (32) de l'unité de corps principal (3), la couche résistante à la corrosion (4) pénètre dans le mécanisme de résistance (34) pour former une troisième partie de rétention (43).

3. Connecteur à insertion centrale selon la revendication 1, où l'unité de corps principal (3) est pourvue d'une section rotative (33) entre la section de connexion filetée (31) et la section d'insertion (32) et le canal d'écoulement (3a) de l'unité de corps principal (3) est pourvue d'un mécanisme de résistance (34) à un emplacement correspondant à la section rotative (33) par un usinage supplémentaire, la couche résistant à la corrosion (4) étant appliquée sur les surfaces du canal d'écoulement (3a), de la section de connexion filetée (31) et de la section d'insertion (32) de l'unité de corps principal (3), la couche résistante à la corrosion (4) pénètre dans le mécanisme de résistance (34) pour former une troisième partie de rétention (43).

4. Connecteur à insertion centrale selon la revendication 1, où une partie de la couche résistant à la corrosion (4) appliquée sur une circonférence externe de la section d'insertion (32) est formée avec de multiples nervures pour former une surface rugueuse (4b).

5. Connecteur à insertion centrale selon la revendication 2, où le mécanisme résistant (34) comprend au moins une rainure en queue d'aronde.

6. Connecteur à insertion centrale selon la revendication 1, 2 ou 3, où la couche résistant à la corrosion (4) est formée avec une section de guidage (4c) qui est d'une configuration divergente s'étendant vers l'extérieur à une extrémité de la section d'insertion. (32).
